# EUROPÄISCHE PATENTANMELDUNG

(11) **EP 3 741 501 A1**
(43) Veröffentlichungstag der Anmeldung: **25.11.2020**
(21) Anmeldenummer: 19175357.3
(22) Anmeldetag: 20.05.2019
(51) Int. Cl.: B23Q 1/00, B23B 31/103, F16B 21/16

(54) **NULLPUNKT-SPANNVORRICHTUNGEN**

(71) Anmelder: SMW-AUTOBLOK Spannsysteme GmbH, 88074 Meckenbeuren (DE)
(72) Erfinder: HELM. Peter, 88074 Meckenbeuren (DE); MAURER, Eckhard, 88094 Oberteuringen (DE)
(74) Vertreter: Engelhardt, Volker

(57) **Zusammenfassung**

Bei einer Nullpunkt-Spannvorrichtung (1) zur zentrierten und wiederholungsgenauen Haltung von Werkstücken (2), Werkzeugen oder Paletten, bestehend aus:
- einem Gehäuse (4), in dem eine mit einer Zentrierachse (6) versehenen Aufnahmeöffnung (5) eingearbeitet ist, die mindestens eine konisch ausgestalteten Anlagefläche (7) aufweist,
- einem Haltebolzen (9), der in die Aufnahmeöffnung (5) einsetzbar und dessen Mantelfläche (10) konisch ausgearbeitet ist, die im eingesetzten Zustand des Haltebolzens (9) an der Anlagefläche (7) der Aufnahmeöffnung (5) zu dessen Zentrierung anliegt, oder aus einem derart ausgestalteten Werkstück (2) bzw. Werkzeug,
- einer in dem Gehäuse (4) vorgesehenen Bohrung (15), in die ein in die Aufnahmeöffnung (5) einmindender Durchbruch (24) vorgesehen ist, und
- einen in die Bohrung (15) eingesetzten Spannbolzen (16), der von einer Ausgangsposition in eine Spannposition überführbar ist, derart, dass die Aufnahmeöffnung (5) in der Ausgangsposition geöffnet und in der Spannposition ein kraftschlüssiger Wirkkontakt zwischen dem Spannbolzen (16) und den Haltebolzen (9) entsteht,
soll zum einen eine zuverlässige dauerhafte sowie wiederholungsgenaue Fixierung einer Vielzahl von Werkstücken (2), Werkzeugen oder Paletten ermöglicht werden und zum anderen das Gehäuse (4) der Spannvorrichtung äußerst kompakt gebaut sein, dass also dessen Außenabmessung in Höhe und Durchmesser äußerst gering gestaltet ist.

Dies ist dadurch erreicht,
- dass die Längsachse (20) der Bohrung (15) tangential zu einer Kreisbahn um die Zentrierachse (6) der Aufnahmeöffnung (5) verläuft,
- dass an dem Spannbolzen (16) eine Exzentrierfläche (21) angearbeitet ist, die im eingesetzten Zustand des Spannbolzens (16) fluchtend zu dem Durchbruch (24) angeordnet ist,
- dass der Spannbolzen (16) drehbar in der Bohrung (15) gelagert und von außen zu dessen Verdrehung frei zugänglich ist,
- und dass die Exzentrierfläche (21) während des Spannzustandes unmittelbar mit einer an dem Haltebolzen (9) oder dem Werkstück (2) bzw. dem Werkzeug angearbeiteten Haltekontur (12) zusammenwirkt, derart, dass der Haltebolzen (9) oder das Werkstück (2) bzw. das Werkzeug in axialer und radialer Richtung in der Aufnahmeöffnung (5) gegen die konischen Anlagefläche (7) der Aufnahmeöffnung (5) arretiert ist.

## Beschreibung

Die Erfindung bezieht sich auf eine Nullpunkt-Spannvorrichtung, durch die ein Werkstück, ein Werkzeug oder eine Palette zentriert und wiederholungsgenau arretiert sein soll nach dem Oberbegriff des Patentanspruchs 1.

Solche Spannvorrichtungen werden an Werkzeugmaschinen zur Abstützung von zu bearbeitenden Gegenständen, insbesondere von rotationssymmetrischen Werkstücken, benötigt, denn diese Werkstücke sind in Serie zu bearbeiten und demnach ohne Zeitverlust auszuwechseln. Dabei soll die vorgegebene Bearbeitungsposition des Werkstückes bezogen auf eine Bezugsgröße, die als sog. Nullpunkt definiert ist, beibehalten sein, um zu vermeiden, dass eine erneute Ausmessung der Werkstückposition erforderlich ist. Demnach wird der Nullpunkt bezogen auf die Werkzeugmaschine oder deren Werkzeugtisch festgelegt und zu diesem die räumliche Position des eingespannten Werkstückes ermittelt. Der Nullpunkt dient demnach als Bezugsgröße für die Bearbeitungsposition des Werkstückes. Beim Austauschen der Werkstücke soll folglich ein identischer Abstand zu der vorgegebenen Bezugsgröße (Nullpunkt) vorhanden sein.

Eine derartige Nullpunkt-Spannvorrichtung ist beispielsweise der EP 1 886 751 B1 zu entnehmen. Die Spannvorrichtung besteht aus einem Gehäuse, in das eine Aufnahmeöffnung eingearbeitet ist. In die Aufnahmeöffnung kann ein Haltebolzen eingesetzt sein, der über seitlich in dem Gehäuse angeordnete Spannschieber festgesetzt ist. Die Spannschieber sind dabei senkrecht zu der Zentrierachse des Haltebolzens angeordnet und bewegen sich somit in radialer Richtung in das Innere der Aufnahmeöffnung und nach außen, um diese freizugeben. Die Spannschieber gelangen in einen reifschlüssigen Wirkkontakt mit dem Haltebolzen, durch den dieses im Spannzustand festgesetzt ist.

Die Spannschieber werden synchron mittels eines axial betätigbaren Stellkolbens betätigt. Zwischen der Stirnseite des Stellkolbens, der als Ring oder Zylinder ausgestaltet ist, und den jeweiligen Spannschiebern ist eine geneigte Fläche oder schiefe Ebene vorgesehen, so dass über die Geometrie der schrägen Fläche bzw. schiefe Ebene die axiale Zustellbewegung des Stellkolben in eine radiale Zustellbewegung für die Spannschieber umgewandelt ist.

Nachteiligerweise hat sich für solche Spannvorrichtungen herausgestellt, dass diese eine sehr hohe Baumessung benötigen, denn die axialen Zustellbewegungen des Stellkolben sind in dem Gehäuse abzustützen. Zudem ist der Zustellweg der Spannschieber äußerst gering, denn durch die schrägen Flächen zwischen dem Stellkolben und den jeweiligen Spannschieber ist diese Bewegungsmöglichkeit begrenzt. Gleichzeitig führt die kraftschlüssige Wirkverbindung zwischen dem Stellkolben und den Spannschiebern dazu, dass der Außendurchmesser des Gehäuses erheblich zu vergrößern ist, um überhaupt eine entsprechende radiale Bewegungsmöglichkeit für die Spannschieber zur Verfügung zu stellen. Folglich baut das Gehäuse der bekannten Spannvorrichtung sowohl in seiner Höhe als auch in seinem Außenumfang entsprechend groß sind. Oftmals sind jedoch die vorhandenen Räume oder Platzverhältnisse an Werkzeugmaschinen begrenzt, so dass solche Nullpunkt-Spannvorrichtungen überhaupt nicht eingesetzt werden können.

Es ist daher Aufgabe der Erfindung eine Nullpunkt-Spannvorrichtung der eingangsgenannten Gattung derart weiterzubilden, dass durch diese zum einen eine zuverlässige dauerhafte sowie wiederholungsgenau Fixierung einer Vielzahl von Werkstücken, Werkzeugen oder Paletten ermöglicht ist und dass zum anderen des Gehäuses der Spannvorrichtung äußerst kompakt baut, dass also dessen Außenabmessung in Höhe und Durchmesser äußerst gering gestaltet werden kann.

Diese Aufgabe ist durch die Merkmale des kennzeichnenden Teils von Patentanspruch 1 gelöst.

Weitere vorteilhafte Weiterbildungen der Erfindung ergeben sich aus den Unteransprüchen.

Dadurch, dass die Längsachse der Bohrung tangential zu einer Kreisbahn um die Zentrierachse der Aufnahmeöffnung verläuft, dass an dem Spannbolzen eine Exzentrierfläche angearbeitet ist, die im eingesetzten Zustand des Spannbolzens fluchtend zu dem Durchbruch angeordnet ist, dass der Spannbolzen drehbar in der Bohrung gelagert und von außen zu dessen Verdrehung frei zugänglich ist, und dass die Exzentrierfläche während des Spannzustandes unmittelbar mit einer an dem Haltebolzen angearbeiteten Haltekontur zusammenwirkt, derart, dass der Haltebolzen in axialer und radialer Richtung in der Aufnahmeöffnung gegen die konischen Anlagefläche der Aufnahmeöffnung arretiert ist, entsteht eine zuverlässige und wiederholungsgenaue Fixierung des Haltebolzens in der Aufnahmeöffnung, denn die Exzentrierfläche des Spannbolzens erzeugt eine Kraftkomponente, die geneigt zu der Längsachse der Bohrung und zu der Zentrierachse der Aufnahmeöffnung verläuft, so dass diese Spannkraft in eine axiale und radiale Kraftkomponente durch die schräge Fläche der Haltekontur umgewandelt ist. Dies bewirkt, dass der Haltebolzen in radialer und axialer Richtung gegen die konische Anlagefläche der Aufnahmeöffnung permanent durch die Exzentrierfläche gedrückt ist. Somit ist der Haltebolzen in das Innere der Aufnahmeöffnung eingezogen und liegt spielfrei und folglich zentriert an der konischen Anlagefläche an. Wenn demnach ein Haltebolzen mit entsprechender Haltekontur an zu bearbeitenden Werkstücken befestigt ist, können die Werkstücke wiederholungsgenau in einer nahezu identischen Zentrierposition arretiert sein. Die Zentrierachse der Aufnahmeöffnung dient dabei als Bezugsgröße, zu der die Längsachse des Haltebolzens möglichst koaxial im eingespannten Zustand des Haltebolzens verlaufen soll.

Diese konstruktive Ausgestaltung führt zu dem dazu, dass die geometrische Abmessung des Gehäuses sowohl in axialer als auch in radialer Richtung äußerst kompakt gehalten werden könne, da keine zusätzlichen Bauvolumen einnehmende Bauteile, wie beispielsweise Stellkolben, erforderlich sind. Vielmehr erfolgt die Betätigung des Spannbolzens unmittelbar von außen, ohne dass hierfür Bauraum benötigt ist.

Da die Exzentrierfläche des Spannbolzens einen Winkel von etwa 250° bis 280°, vorzugsweise 270°, aufweist, kann der dazu gegenüberliegende Umfang des Spannbolzenplan ausgestaltet sein, so dass die Exzentrierfläche von dem Übergangsbereich zwischen der Bohrung und der Aufnahmeöffnung, in dem der Durchbruch vorgesehen ist, weggedreht sein kann, um die Aufnahmeöffnung freizugeben. Folglich ragt die Exzentrierfläche des Spannbolzens in der Ausgangsposition nicht in die Aufnahmeöffnung hinein, da die plane Fläche fluchtend zu dem Durchbruch verläuft, wenn der Haltebolzen eingesetzt werden soll. Demnach ist die Aufnahmeöffnung freigegeben und der Haltebolzen kann behinderungsfrei in diese eingesetzt werden.

Die Exzentrierfläche des Spannbolzens wird derart gebildet, dass diese kreisförmig um einen Mittelpunkt verläuft, der zu den Längsachsen der Bohrung und des Spannbolzens einen Exzentrier-Abstand aufweist. Daher kann die Exzentrierfläche des Spannbolzens während des Spannungszustandes aus der Bohrung durch den Durchbruch in die Aufnahmeöffnung eingedreht werden. Die Haltekontur des Haltebolzens ist dabei fluchtend zu dem Durchbruch und somit zu der Exzentrierfläche im eingesetzten Zustand des Haltebolzens anzuordnen. Das Ende der konischen Mantelfläche des Haltebolzens dient als Bezugspunkt für den Abstand der Haltekontur zu diesem, denn der Abstand der Haltekontur, insbesondere deren geneigte Spannfläche, die mit der Exzentrierfläche des Spannbolzens zusammenwirkt, ist an die Position des Durchbruchs bzw. des Austrittes der Exzentrierfläche des Spannbolzens anzupassen.

Die Querschnittsform der Haltekontur weist zunächst einen Teilkreis auf, der in eine geneigte Fläche oder schräge Ebene mit einem Neigungswinkel von etwa 45° übergeht. Dabei verläuft die geneigte Spannfläche von innen nach außen nach unten, so dass die Exzentrierfläche des Spannbolzens von oben auf diese einwirkt.

Die Fixierung des Haltebolzens in der Aufnahmeöffnung kann über eine zylinderförmige Mantelfläche, die als Anlage zwischen dem Haltebolzen und der Aufnahmeöffnung dient und die von der konischen Mantelfläche des Haltebolzens beabstandet ist, weiter verbessert sein, denn dadurch entstehen zwei zueinander beabstandete ringförmige Anlagen, nämlich die konische Anlagefläche und die zylinderförmige Anlagefläche zwischen dem Haltebolzen und der Aufnahmeöffnung. Zudem ist die Haltekontur zwischen diesen Anlageflächen an dem Haltebolzen vorgesehen, so dass die von der Exzentrierfläche des Spannbolzens erzeugte Spannkraft zwischen der konischen und der zylinderförmigen Anlagefläche des Haltebolzens einwirkt. Demnach entsteht eine optimale Kraftverteilung zwischen den vorhandenen Anlageflächen des Haltebolzens und der Aufnahmeöffnung.

In der Zeichnung ist eine Nullpunkt-Spannvorrichtung dargestellt, die nachfolgend näher erläutert ist. Im Einzelnen zeigt:
- Figur 1: eine Nullpunkt-Spannvorrichtung mit einem Gehäuse und einer in dieses eingearbeiteten Aufnahmeöffnung, und mit einem Haltebolzen, der koaxial zu der Zentrierachse der Aufnahmeöffnung positioniert ist sowie einer in dem Gehäuse vorgesehenen Bohrung, in die ein Spannbolzen drehbar eingesetzt ist, der eine mit dem Haltebolzen zusammenwirkende Exzentrierfläche aufweist, in perspektivischer Ansicht,
- Figur 2a: die Spannvorrichtung gemäß Figur 1 im Schnitt und in der Ausgangsposition,
- Figur 2b: die Spannvorrichtung gemäß Figur 2a im eingesetzten ungespannten Zustand des Haltebolzens in der Aufnahmeöffnung,
- Figur 2c: die Spannvorrichtung gemäß Figur 2b in einer Übergangsposition, in der der Spannbolzen in Richtung des Haltebolzens um etwa 110° gedreht ist,
- Figur 2d: die Spannvorrichtung gemäß Figur 2c im Spannzustand, der durch die Selbsthemmung der Exzentrierfläche des Spannbolzens und deren Zusammenwirken mit dem Haltebolzen definiert ist und
- Figur 3: die Spannvorrichtungen gemäß Figur 2 mit geometrischen Angaben und den jeweiligen Kraftverläufen, die von der Spannkraft der Exzentrierfläche des Spannbolzens über die Haltekontur des Haltebolzens an die konische und zylinderförmige Anlagefläche zwischen Haltebolzen und Aufnahmeöffnung übertragen sind.

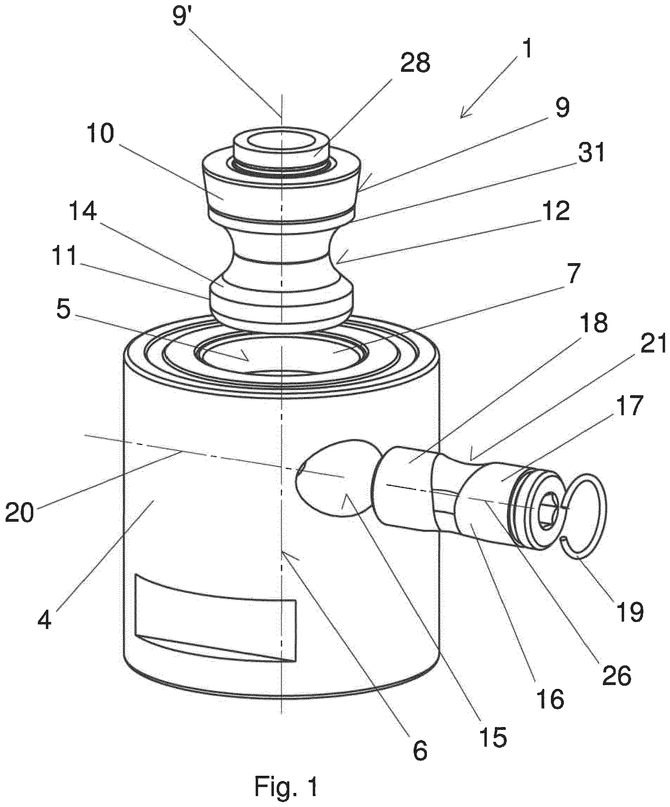

In Figur 1 ist eine Nullpunkt-Spannvorrichtung 1 abgebildet, durch die wiederholungsgenau ein Werkstück 2 zentriert gehalten ist. Die Spannvorrichtung 1 besteht dabei aus einem Gehäuse 4, in das eine Aufnahmeöffnung 5 eingearbeitet ist. Die im wesentlichen zylinderförmige Aufnahmeöffnung 5 weist eine Zentrierachse 6 auf, die der Symmetrieachse der Aufnahmeöffnung 5 entspricht. Die Zentrierachse 6 dient als Bezugsgröße oder Bezugspunkt für die Ausrichtung des jeweiligen Werkstückes 2.

Die Aufnahmeöffnung 5 weist eine konisch ausgestaltete Anlagefläche 7 auf, die im Eingangsbereich der Aufnahmeöffnung 5 in das Innere des Gehäuses 4 angeordnet ist. Darüber hinaus ist im Inneren der Aufnahmeöffnung 5 eine zylindrische Anlagefläche 8 eingearbeitet, die zueinander beabstandet sind.

In die Aufnahmeöffnung 5 ist ein Haltebolzen 9 einzusetzen, durch den das Werkstück 2 mit dem Gehäuse 4 der Spannvorrichtung 1 gekoppelt ist. Für eine zentrierte und wiederholungsgenaue Fixierung des Haltebolzens 9 ist es dabei erforderlich, dass die Symmetrieachse des Haltebolzens 9, die mit der Bezugsziffer 9' versehen ist, koaxial zu der Zentrierachse 6 der Aufnahmeöffnung 5 verläuft.

Darüber hinaus ist an dem Haltebolzens 9 eine konisch ausgestaltete Mantelfläche 10 anzuarbeiten, die im eingesetzten Zustand des Haltebolzen 9 in die Aufnahmeöffnung 5 mit der konischen Anlagefläche 7 der Aufnahmeöffnung 5 zusammenwirkt und spielfrei an dieser anliegt. Die Neigungswinkel der konischen Anlagefläche 7 und der konischen Mantelfläche 10 sind dabei identisch und betragen etwa eine Neigung von 10° bis 20° aus der Vertikalen. Um den Haltebolzen 9 überhaupt in die Aufnahmeöffnung 5 einsetzen zu können, ist es erforderlich, dass der im unmittelbaren äußeren Bereich der Aufnahmeöffnung 5 verlaufende Durchmesser größer ist als der im Inneren der Aufnahmeöffnung 5 vorhandene Durchmesser. Somit weist die konische Anlagefläche 7 eine nach außen geöffnete V-förmige Kontur auf.

Darüber hinaus ist an dem Haltebolzens 9 eine zylindrische Mantelfläche 11 angearbeitet, die mit der im Inneren der Aufnahmeöffnung 5 vorgesehene zylindrische Anlagefläche 8 zusammenwirkt. Zwischen der konischen Anlagefläche 10 und der zylindrischen Mantelfläche 11 des Haltebolzen 9 ist eine Haltekontur 12 eingearbeitet, die ausgehend von dem Ende der konischen Mantelfläche 10 zunächst einen Teilkreis 31 aufweist, der anschließend in eine geneigt verlaufende Spannfläche 14 übergeht. Die Spannfläche 14 weist dabei eine Neigung auf, die von innen nach außen abfällt, also nach unten ausgerichtet ist. Der Neigungswinkel beträgt 45° zu der Horizontalen.

In das Gehäuse 4 ist zur Fixierung des Haltebolzen 9 ein Spannbolzen 16 vorgesehen, der in eine in dem Gehäuse 4 eingearbeiteten Bohrung 15 drehbar gelagert ist.

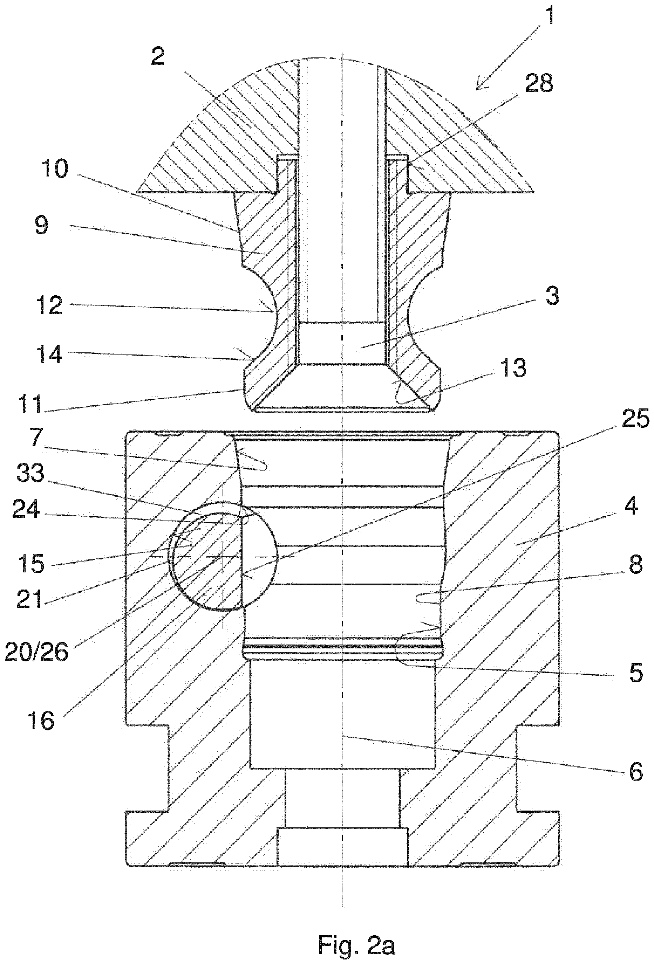

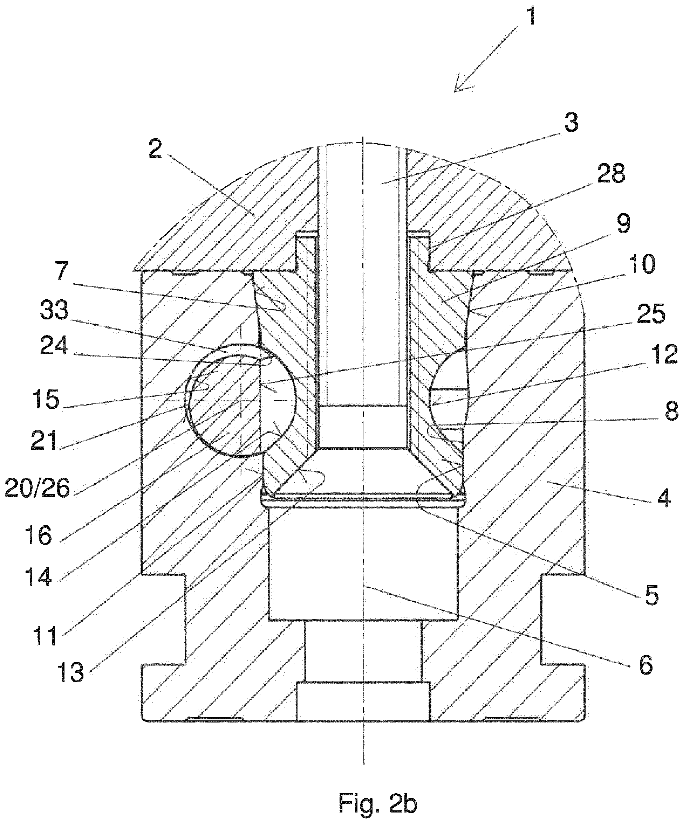

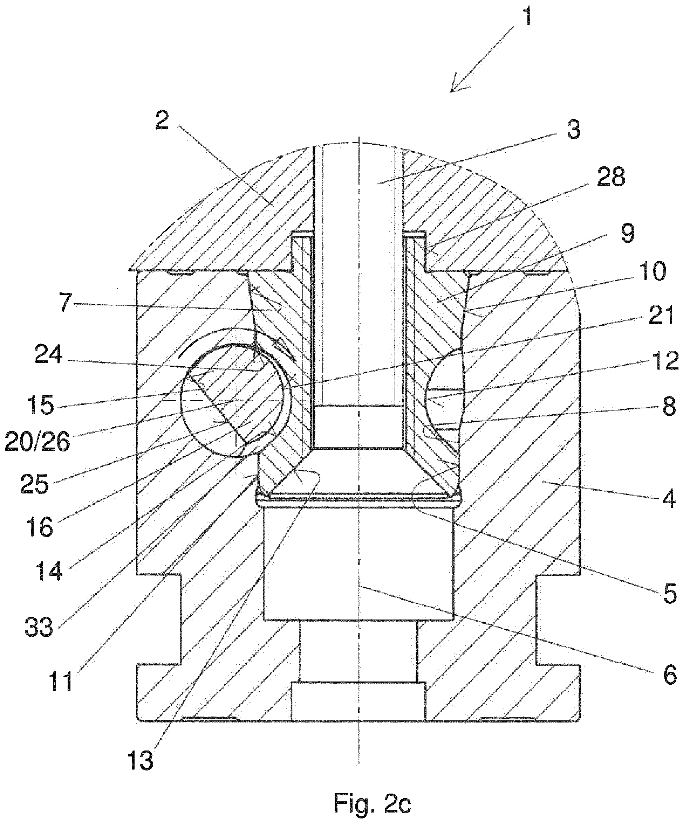

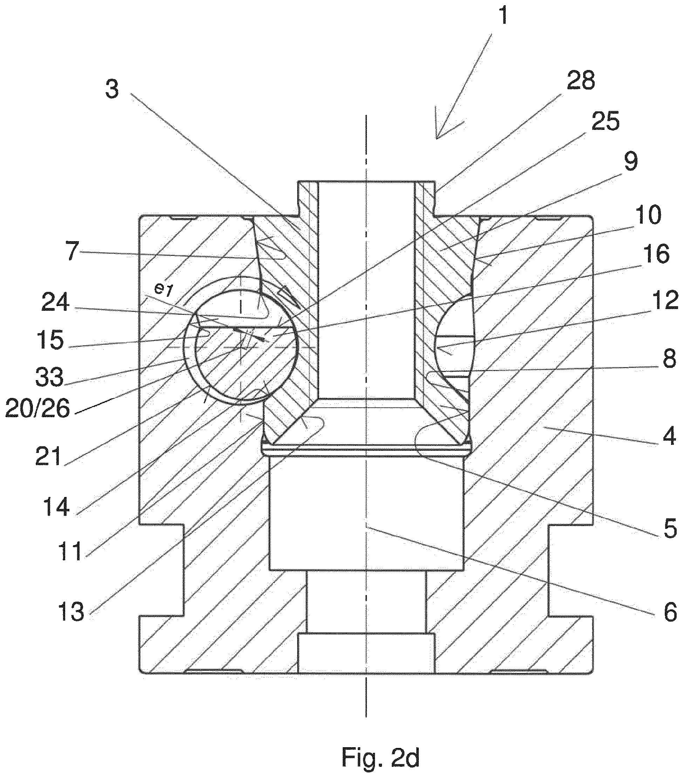

Aus den Figuren 2a, 2b, 2c sowie 2d ist der Bewegungs- und Spannablauf von der Ausgangsposition bis zur Spannposition des Haltebolzens 9 in der Aufnahmeöffnung 5 zu entnehmen. Um überhaupt einen Wirkkontakt zwischen dem Spannbolzen 16 und dem Haltebolzen 9 herstellen zu können, ist es erforderlich, zwischen der Bohrung 15 und der Aufnahmeöffnung 5 einen Durchbruch 24 oder einen Freiraum einzuarbeiten.

Schematisch ist diesen Figuren zu entnehmen, wie das Werkstück 2 an dem Haltebolzen 9 zentriert abzustützen und zu fixieren ist. An der nach oben abstehenden freien Stirnseite des Haltebolzens 9 ist dabei zunächst eine zylinderförmige Zentrierfläche 28 vorgesehen. Das Werkstück 2 weist eine identisch dazu ausgestaltete Aufnahmefläche auf, so dass das Werkstück 2 spielfrei an der Zentrierfläche 28 des Haltebolzens 9 anliegt. In den Haltebolzens 9 ist gegenüberliegend zu der Zentrierfläche 28 eine Senkbohrung 13 eingearbeitet, in die ein Gewindestift 3 einsetzbar ist. Der Gewindestift 3 durchgreift somit den Haltebolzens 9 und fixiert demnach das Werkstück 2. Das Werkstück 2 und der Haltebolzen 9 sind dabei in einer wiederholungsgenauen Ausrichtung zueinander verbunden. Die Symmetrieachse des Werkstückes 2 und die Symmetrieachse 9' des Haltebolzens 9 verlaufen koaxial zueinander. Wenn nunmehr der Haltebolzen 9 wiederholungsgenau in der Nullpunkt-Spannvorrichtung 1 einsetzbar ist, ist die Position des Werkstückes 2 gegenüber einem vorgegebenen Nullpunkt als Bezugsgröße einer Werkzeugmaschine vorgegeben.

In Figur 2a ist der Ausgangszustand dargestellt. Der Haltebolzen 9 und das Werkstück 2 befinden sich außerhalb der Aufnahmeöffnung 5 und sollen in diese einsetzbar sein. Zu diesem Zweck besteht der Spannbolzen 16 aus einer ersten Führungsfläche 17 und einer zweiten Führungsfläche 18, die zylindrisch ausgestaltet sind und an der Innenwand der Bohrung 15 anliegen. Mittels eines Segeringes 19 ist der Spannbolzen 16 in der Bohrung 15 lageorientiert und vertretbar gehalten. Zwischen den ersten und zweiten Führungsflächen 17, 18 des Spannbolzens 16 ist eine Exzentrierfläche 21 sowie eine dazu gegenüberliegende plane Fläche 25 angearbeitet. In der abgebildeten Ausgangsposition verläuft die plane Fläche 25 fluchtend zu dem Durchbruch 24. Dessen Exzentrierfläche 21 ist folglich von der Aufnahmeöffnung 5 abgewandt und gibt diese somit frei. Der Haltebolzen 9 kann - wie in Figur 2b gezeigt - in das Innere der Aufnahmeöffnung 5 eingesetzt werden, da die plane Fläche 25 der Aufnahmeöffnung 5 zugewandt ist und in dieser nicht einragt. Die konischen Anlageflächen 7 und konischen Mantelfläche 10 bewirken, dass der Haltebolzens 9 in eine vorgegebene Eindringtiefe eingesetzt werden kann. Der Haltebolzen 9 liegt demnach mit seiner konischen Mantelfläche 10 und seiner zylindrischen Mantelfläche 11 an der entsprechend ausgestalteten Innenwand der Aufnahmeöffnung 5 nahezu spielfrei an.

Darüber hinaus ist es erforderlich, dass die Haltekontur 12 des Haltebolzens 9 exakt derart positioniert ist, dass der Spannbolzen 16, insbesondere dessen Exzentrierfläche 21 mit dieser zusammenwirkt. Zu diesem Zweck ist die Haltekontur 12 zunächst als Teilkreis 31 ausgestaltet, der in die geneigt verlaufende Spannfläche 14 übergeht. Im eingesetzten Zustand des Haltebolzen 9 soll der Anfang des Teilkreises 31 fluchtend zu dem oberen Bereich des Durchbruches 24 verlaufen und die geneigte Spannfläche 14 in den dazu gegenüberliegenden unteren Bereich des Durchbruchs 24 münden. Somit ist der Spannbolzen 16 fluchtend zu der Haltekontur 12 in Form des Teilkreises 31 und der geneigten Spannfläche 14 ausgerichtet, denn die Größe des Durchbruches 24 entspricht der Öffnung der Haltekontur 12.

In Figur 2c ist der Spannbolzen 16 um etwa 120° gegenüber seiner Ausgangsposition verdreht und ragt folglich bereichsweise in die Haltekontur 12 des Haltebolzens 9 bzw. der Aufnahmeöffnung 5 ein, ohne mit dem Teilkreis 31 bzw. der Spannfläche 14 in einem Wirkkontakt zu stehen. Sollte der Haltebolzen 9 nicht vollständig in der Aufnahmeöffnung 5 positioniert sein, kann durch die Exzentrierfläche 21 des Spannbolzens 16 bereits in dieser Position eine Krafteinwirkung auf die Haltekontur 12 des Haltebolzens 9 ausgeübt sein, um diesen in das Innere der Aufnahmeöffnung 5 zu drücken.

Aus den Figuren 2b und 2c ist insbesondere die Ausgestaltung der Exzentrierfläche 21 zu erkennen. Die Längsachsen 20 der Bohrung 15 und die Längsachse 26 des Spannbolzen 16 verlaufen nämlich koaxial zueinander. Um diese beiden Längsachsen 20 und 26 ist der Spannbolzen 16 vertretbar. Die Exzentrierfläche 21 weist einen Mittelpunkt 22 auf. Um diesen Mittelpunkt 22 ist die Exzentrierfläche mit einem Radius 23 ausgebildet. Der Mittelpunkt 22 ist von den Längsachsen 20 und 26 beabstandet. Dieser Abstand ist mit dem Bezugszeichen e gekennzeichnet. Da die Exzentrierfläche 21 um den Mittelpunkt 22 mit dem Radius 23 in einem Winkel von vorzugsweise 270° verläuft und der Mittelpunkt 22 zu den Längsachsen 20 und 26 mit der Exzentrierfläche 21 mit einem Abstand e beabstandet ist, entsteht ein sichelförmiger Luftspalt 33 zwischen der Exzentrierfläche 21 und der Haltekontur 12 bzw. im Ausgangszustand auch zwischen der Exzentrierfläche 21 und der Bohrung 15.

Sobald gemäß Figur 2d der Spannbolzen 16 in seinen Spannzustand verdreht ist, wirkt die Exzentrierfläche 21 unmittelbar auf die Spannfläche 14 des Haltebolzens 9 ein. Die Spannfläche 14 dient zum einen als Kraftübertragungsfläche zwischen dem Spannbolzen 16 und dem Haltebolzen 9 und zum anderen als Anschlag, denn die Verdrehung des Spannbolzens 16 kann über den in Figur 2d dargestellten Zustand nicht weiter im Uhrzeigersinn verdreht sein. Somit ist der Spannbolzen 16 durch die Spannfläche 14 in seiner Rotation im Uhrzeigersinn also in Richtung der Spannfläche 14 gehemmt und festgesetzt.

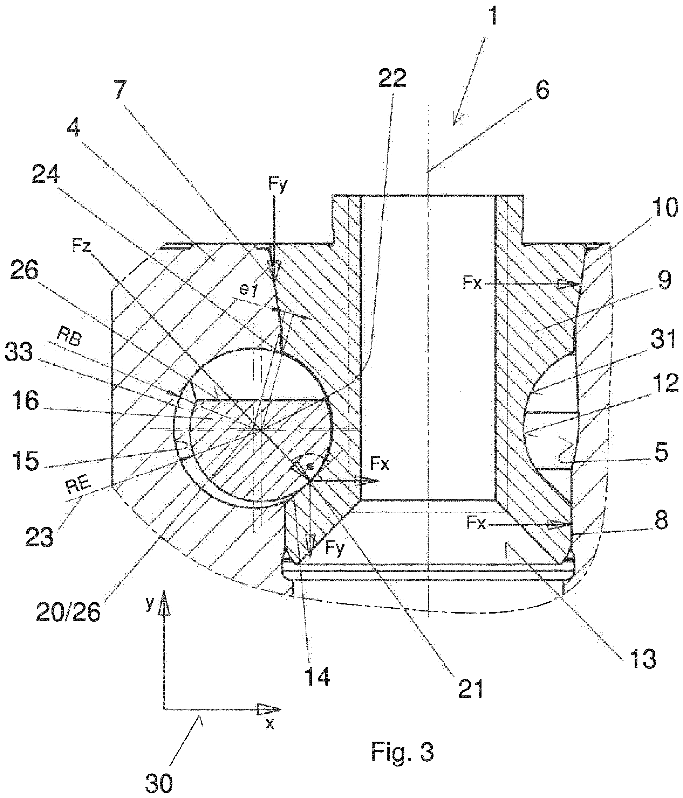

In Figur 3 sind nunmehr die sich ergebenen Kraftverläufe und deren Auswirkungen auf den Spannzustand des Haltebolzens 9 im Inneren der Aufnahmeöffnung 5 zu entnehmen. Die Spannfläche 14 ist in einem Winkel von 45° gegenüber der horizontal geneigt und verläuft von innen nach außen nach unten. Die Verdrehung des Spannbolzens 16 kann um die Längsachsen 20 und 26 im Uhrzeigersinn bewirken, dass die Exzentrierfläche 21 von oben auf die Spannfläche 14 auftrifft und folglich eine Spannkraft F_{z} entsteht, die in einem senkrechten Winkel auf die Spannfläche 14 einwirkt. Durch die vorhandene Neigung der Spannfläche 14 wird die Spannkraft F_{z} in X- und Y-Richtung gemäß des eingezeichneten Koordinatensystems 30 aufgeteilt. Folglich entsteht eine radiale (X-Richtung) und eine axiale (Y-Richtung) Kraftkomponente Fₓ, F_{y}. Diese Kraftkomponenten Fₓ und F_{y} bewirken zum einen, dass der Haltebolzen 9 in radialer Richtung gegen die chronische Anlagefläche 7 der Aufnahmeöffnung 5 und gegen die zylindrische Anlagefläche 8 gedrückt sind und zum anderen, dass der Haltebolzen 9 in axialer Richtung gegen die konische Anlagefläche 7 gepresst ist. Der Haltebolzen 9 ist somit durch die Spannkraft F_{z} in das Innere der Aufnahmeöffnung 5 geführt und dort lageorientiert sowie zentriert fixiert.

Da der Spannbolzen 16 von außen frei zugänglich ist, kann beispielsweise mittels eines Schraubendrehers oder eines sonstigen geeigneten Werkzeuges die Drehbewegung des Spannbolzens 16 im Uhrzeigersinn zur Erzielung des Spannungszustandes bzw. entgegen des Uhrzeigersinns, um die Aufnahmeöffnung 5 freizugeben, bewerkstelligt sein. Folglich sind Bauteile innerhalb des Gehäuses 4 zur Betätigung des Spannbolzens 16 nicht erforderlich, so dass die geometrischen Abmessungen des Gehäuses 4 äußerst kompakt, also klein gehalten werden können. Folglich kann ein derart konstruktiv ausgestaltetes Gehäuse 4 an einer Werkzeugmaschine mit geringem Bauraum verwendet sein.

Die in den Figuren 2a bis 2d abgebildete mechanische Kopplung zwischen dem Werkstück 2 und dem Haltebolzen 9 ist als rein beispielhaft zu verstehen. Die Fixierung bzw. Anbringung des Werkstückes 2 an dem Haltebolzen 9 kann auf eine vielfältige konstruktive Ausgestaltung erfolgen; allein entscheidend ist, dass das Werkstück 2 in einer vorgegebenen und bekannten Position an dem Haltebolzen 9 befestigt ist. Anschließend sind die derart zueinander ausgerichteten Symmetrieachsen des Werkstückes 2 und des Haltebolzens 9 koaxial zu der Zentrierachse 6 der Aufnahmeöffnung 5 anzuordnen und bei jedem Austausch des Haltebolzens 9 eine möglichst wiederholungsgenaue Positionierung zu erreichen.

Die Anordnung der Bohrung 15 in Bezug auf die Aufnahmeöffnung 5 ist für die vorliegende Spannvorrichtung 1 von erfindungswesentlicher Bedeutung. Zum einen ist die Bohrung 15 tangential zu der als Kreisbahn anzusehenden Innenwand der Aufnahmeöffnung 5 auszurichten, so dass die Bohrung 15 beabstandet und senkrecht zur Zentrierachse 6 ausgerichtet ist. Der Durchmesser der Bohrung 15 um die Längsachse 20 ist dabei derart zu bemessen, dass beim Einarbeiten der Bohrung 15 bereits der Durchbruch 24 entsteht. Darüber hinaus ist die Größe bzw. der Durchmesser des Durchbruchs 24 an die Haltekontur 12 derart anzupassen, dass die Haltekontur 12 exakt fluchtend zu dem Durchbruch 24 ausgerichtet ist, wenn der Haltebolzen 9 in die Aufnahmeöffnung 5 eingesetzt und der erste Wirkkontakt der Exzentrierfläche 21 auf die geneigte Standfläche 14 des Haltebolzens 9 einwirkt.

Eine solche konstruktive Ausgestaltung der benötigten Bauteile stellt eine äußerst platzsparende Anordnung dar. Zudem können aufgrund der bekannten geometrischen Abmessungen innerhalb des Gehäuses vier, insbesondere die Position der Längsachse 20 der Bohrung 15 und die daraus resultierende Position des Durchbruchs 24 sowie des Haltebolzens 9 dazu verwendet sein, eine nahezu identische Vielfalt von Haltebolzen 9 herzustellen, die in ein derart konstruktiv ausgestaltetes Gehäuse 4 einsetzbar sind. Folglich können die Werkstücke 2 an den entsprechend identisch ausgestalteten Haltebolzen 9 befestigt, also vormontiert sein, so dass der Austausch der jeweiligen Haltebolzen 9 zusammen mit den Werkstücken 2 zeitsparend erfolgt.

In den vorhandenen Erläuterungen ist auf das Ausführungsbeispiel Bezug genommen, dass der Haltebolzen 9 in die Aufnahmeöffnung 5 eingesetzt und während des Spannzustandes zentriert fixiert ist. Der Haltebolzen 9 stellt folglich ein Trägerteil für das Werkstück 2, Werkzeug oder eine Palette dar. Es versteht sich für jeden handwerklich versierten Fachmann, dass in jedes Werkstück 2 bzw. das Werkzeug eine den Haltebolzen 9 nachgebildete Haltekontur 12 einzuarbeiten, so dass jedes Werkstück 2 bzw. jedes Werkzeug unmittelbar in die Aufnahmeöffnung 5 einsetzbar und in diesen lageorientiert und zentriert gehalten ist.

## Patentansprüche

1. Nullpunkt-Spannvorrichtung (1) zur zentrierten und wiederholungsgenauen Haltung von Werkstücken (2), Werkzeugen oder Paletten,
bestehend aus:
- einem Gehäuse (4), in dem eine mit einer Zentrierachse (6) versehenen Aufnahmeöffnung (5) eingearbeitet ist, die mindestens eine konisch ausgestalteten Anlagefläche (7) aufweist,
- einem Haltebolzen (9), der in die Aufnahmeöffnung (5) einsetzbar und dessen Mantelfläche (10) konisch ausgearbeitet ist, die im eingesetzten Zustand des Haltebolzens (9) an der Anlagefläche (7) der Aufnahmeöffnung (5) zu dessen Zentrierung anliegt, oder aus einem derart ausgestalteten Werkstück (2) bzw. Werkzeug,
- einer in dem Gehäuse (4) vorgesehenen Bohrung (15), in die ein in die Aufnahmeöffnung (5) einmindender Durchbruch (24) vorgesehen ist, und
- einen in die Bohrung (15) eingesetzten Spannbolzen (16), der von einer Ausgangsposition in eine Spannposition überführbar ist, derart, dass die Aufnahmeöffnung (5) in der Ausgangsposition geöffnet und in der Spannposition ein kraftschlüssiger Wirkkontakt zwischen dem Spannbolzen (16) und den Haltebolzen (9) entsteht,
**dadurch gekennzeichnet,**
- **dass** die Längsachse (20) der Bohrung (15) tangential zu einer Kreisbahn um die Zentrierachse (6) der Aufnahmeöffnung (5) verläuft,
- **dass** an dem Spannbolzen (16) eine Exzentrierfläche (21) angearbeitet ist, die im eingesetzten Zustand des Spannbolzens (16) fluchtend zu dem Durchbruch (24) angeordnet ist,
- **dass** der Spannbolzen (16) drehbar in der Bohrung (15) gelagert und von außen zu dessen Verdrehung frei zugänglich ist,
- und **dass** die Exzentrierfläche (21) während des Spannzustandes unmittelbar mit einer an dem Haltebolzen (9) oder dem Werkstück (2) bzw. dem Werkzeug angearbeiteten Haltekontur (12) zusammenwirkt, derart, dass der Haltebolzen (9) oder das Werkstück (2) bzw. das Werkzeug in axialer und radialer Richtung in der Aufnahmeöffnung (5) gegen die konischen Anlagefläche (7) der Aufnahmeöffnung (5) arretiert ist.

2. Spannvorrichtung nach Anspruch 1,
**dadurch gekennzeichnet,**
**dass** die Exzentrierfläche (21) des Spannbolzens (16) einen Winkel bezogen auf dessen Umfang von 250° bis 280°, vorzugsweise 270°, aufweist und dass die der Exzentrierfläche (21) gegenüberliegenden Bereich des Spannbolzens (16) als plane Fläche (25) ausgebildet ist und im geöffneten Zustand der Aufnahmeöffnung (5) fluchtend zu dem Durchbruch (24) verläuft.

3. Spannvorrichtung nach Anspruch 1 oder 2,
**dadurch gekennzeichnet,**
**dass** die Längsachse (26) des Spannbolzens (16) zu der Längsachse (20) der Bohrung (15) koaxial verläuft und dass die Exzentrierfläche (21) um einen Mittelpunkt (22) kreisförmig ausgebildet ist, der von den beiden Längsachsen (20, 26) einen Exzentrier-Abstand (e) aufweist.

4. Spannvorrichtungen nach einem der vorgenannten Ansprüche,
**dadurch gekennzeichnet,**
**dass** benachbart zu der Exzentrierfläche (21) des Spannbolzens (16) an diesem zwei rotationsymmetrischen Führungsflächen (17, 18) vorgesehen sind, die in dem eingesetzten Zustand des Spannbolzens (12) an der Bohrung (15) abgestützt sind.

5. Spannvorrichtungen nach einem der vorgenannten Ansprüche,
**dadurch gekennzeichnet,**
**dass** der Spannbolzen (16) mittels einer mechanischen Sicherung in dessen axialer Richtung gehalten ist, die beispielsweise als Sprengring (19) ausgestaltet ist.

6. Spannvorrichtung nach einem der vorgenannten Ansprüche,
**dadurch gekennzeichnet,**
**dass** der Haltebolzen (9) zwei zueinander beabstandete Anlageflächen (10, 11) aufweist, dass die erste Anlagefläche (10) die konische Außenkontur aufweist und im Bereich des Zuganges der Aufnahmeöffnung (5) angeordnet ist, dass die Haltekontur (12) des Haltebolzens zwischen den beiden Anlageflächen (10, 11) vorgesehen ist und dass die zweite Anlagefläche (11) des Haltebolzens (9) eine zylinderförmige Außenkontur aufweist, die an der Innenwand der Aufnahmeöffnung (5) im eingesetzten Zustand des Haltebolzens (9) spielfrei anliegt oder dass das jeweilige Werkstück (2) bzw. das jeweilige Werkzeug derart ausgestaltet ist.

7. Spannvorrichtungen nach einem der vorgenannten Ansprüche,
**dadurch gekennzeichnet,**
**dass** die Haltekontur (12) des Haltebolzens (9) im Querschnitt als Teilkreis (31) ausgestaltet ist, der in eine geneigte Fläche (14), die in Richtung der Innenwand der Aufnahmeöffnung (5) ausgerichtet ist, übergeht, oder dass das jeweilige Werkstück (2) bzw. das jeweilige Werkzeug derart ausgestaltet ist

8. Spannvorrichtung nach Anspruch 7,
**dadurch gekennzeichnet,**
**dass** die geneigte Fläche (14) der Haltekontur (12) unter einem Winkel von 40° bis 50° gegenüber der Zentrierachse (6) der Aufnahmeöffnung (5) bzw. der Vertikalen geneigt ist und dass die geneigte Fläche (14) von außen nach innen ansteigt.

9. Spannvorrichtungen nach einem der vorgenannten Ansprüche,
**dadurch gekennzeichnet,**
**dass** der Wirkkontakt zwischen der Exzentrierfläche (21) des Spannbolzens (16) und der Haltekontur (12) des Haltebolzens (9) derart groß bemessen ist, dass eine reifschlüssige Selbsthemmung entsteht bzw. vorliegt.

10. Spannvorrichtungen nach einem der vorgenannten Ansprüche,
**dadurch gekennzeichnet,**
**dass** die von dem Spannbolzen (14) aufgebr8e Haltekraft (F_{z}), die auf die Spannfläche der Haltekontur (12) des Haltebolzens (9) im eingespannten Zustand einwirkt, unter einem senkrechten Winkel auf die geneigte Fläche (14) der Haltekontur (12) einwirkt und dadurch eine Kraftaufteilung (Fₓ, F_{y})in radialer und axialer Richtung entsteht, durch die der Haltebolzen (9) gegen die Innenwand der Aufnahmeöffnung (5) und gleichzeitig auf die konische Anlagefläche (7) in das Innere des Gehäuses (4) eingedrückt ist.

11. Spannvorrichtung nach einem der vorgenannten Ansprüche,
**dadurch gekennzeichnet,**
**dass** der Radius der Exzentrierfläche (21) kleiner bemessen ist als der Radius des Teilkreises (31) der Haltekontur (12) und dass zwischen der Exzentrierfläche (21) und des Teilkreises (31) einen Spannzustand und während des Verdrehens des Spannbolzens (16) ein Luftspalt (33) vorhanden ist.

12. Spannvorrichtung nach einem der vorgenannten Ansprüche,
**dadurch gekennzeichnet,**
**dass** die Haltekontur (12) des Haltebolzens (9) in dessen eingespannten Zustand fluchtend zu der Exzentrierfläche (21) des Spannbolzens (16) verläuft uns dass der Querschnitt der Haltekontur (12) an die Kontur der Exzentrierfläche (21) derart eingepresst ist, dass diese in die Haltekontur (12) eintaucht und auf diese eine Spannkraft ausübt die geragt zu der Längsachse (20, 26) und der Zentrierachse (6) verläuft.
